# EUROPEAN PATENT SPECIFICATION

(11) **EP 1 613 566 B1**
(45) Date of publication and mention of the grant of the patent: **30.05.2018**
(21) Application number: 04758776.1
(22) Date of filing: 01.04.2004
(51) Int. Cl.: C04B 35/64, B29C 67/00

(54) **METHOD FOR PRODUCING CERAMIC MOLDS AND THE MOLDS FORMED BY THE METHOD**
VERFAHREN ZUR HERSTELLUNG VON KERAMISCHER GIESSFORMEN UND DIE GIESSFORMEN HERGESTELLT NACH DEM VERFAHREN
PROCEDE DE PRODUCTION DES MOULES EN CERAMIQUE ET DES MOULES OBTENUES PAR LE PROCEDE

(30) Priority: 04.04.2003 US 460326 P
(43) Date of publication of application: 11.01.2006
(73) Proprietor: Siemens Aktiengesellschaft, 80333 München (DE)
(72) Inventor: GOLDSCHMIDT, Dirk, 47445 Moers (DE); BUBLATH, Boris, 13581 Berlin (DE); DAUS, Nikolai-Alexander, 10439 Berlin (DE); BEECK, Alexander, Ralph, Orlando, FL 32828 (US)
(86) International application number: PCT/US2004/010176
(87) International publication number: WO 2004/089851

(56) References cited:
- US-A- 4 863 538
- US-A- 5 837 960

## Description

### FIELD OF THE INVENTION

This invention relates to a process for producing ceramic molds from a ceramic powder and a ceramic mold formed by the process.

### BACKGROUND OF THE INVENTION

For various purposes, e.g., test purposes, ceramic shaped objects often have to be produced quickly. Hitherto, complex processes have been used, such as the pressing of ceramic powders with subsequent sintering and machining to a final shape. Ceramic objects of this type may comprise, inter alia, mold shells which are used in casting. In this case too, it is desirable to produce mold shells quickly to allow rapid testing of castings, for example.

US 6,446,697 has disclosed a process for producing complex castings in which wax models are used in an intermediate step.

US 6,273,326 has disclosed the production of ceramic shaped parts in which individual layers are joined to one another by means of laser sintering.

US 5,824,250 has disclosed the production of a ceramic shaped part by means of a gel that contains ceramic. This process requires the use of a mold.

DE 198 53 834 A1 has disclosed a process for producing components by application technology. In this case, material has to be applied in layers. This is very time-consuming.

DE 199 48 591 A1 or WO 01/26885 A1 discloses a rapid prototyping process using a special application technology. The application technology involves the material which is to be applied being present in a support liquid.

U.S. 4,863,538, titled "Method and Apparatus for Producing Parts by Selective Sintering," and U.S. 5,132,143, titled "Method for Producing Parts," each discloses computer-aided laser apparatus for sequentially sintering a plurality of powder layers to build the desired part.

It is known from a publication issued by the Institute for Ceramic Technologies and Sintered Materials entitled "Rapid Prototyping of Complex-Shaped Parts of Si/SiC Ceramics by Laser Sintering" to use CAD data to sinter ceramic components by means of laser. However, the ceramic components produced in this way are porous and have to be infiltrated with liquid silicon.

The contribution "Prototyping of Complex-Shaped Parts and Tools of Si/SiC Ceramics by Selective Laser Sintering" by Von W. Löschau, R. Lenk, Siegfried Scharek, M. Teichgräber, S. Nowotny, C. Richter, known from the 9th Simtec-World Ceramics Congress: Ceramics: Getting into the 2000s-Part B, likewise deals with the laser sintering of porous ceramic components.

It is known from the prior art to produce porous ceramics and to fill them with liquid silicon. This causes problems for high-temperature applications of a component of this type, since the silicon is vulnerable to re-melting during the use of the part.

### SUMMARY OF THE INVENTION

Standard rapid prototyping processes can be adapted to produce improved ceramic shaped objects. Inter alia, the selective laser sintering of ceramic powders may be useful in this context. In one exemplary embodiment, powder may be applied continuously or discontinuously, for example in a powder bed, and may be densified (e.g., sintered) by heat produced by laser energy directed at locations that correspond to the component to be produced. The present invention provides a method for rapidly producing a ceramic mold having different material properties at selectable locations within the mold as defined in claim 1 and a ceramic mold as formed by the process of claim 1, as defined in claim 9. Laser energy is used to sinter the ceramic powder. By way of example, powder particle size, powder particle composition, and laser energy parameters may be selectively varied across regions of the object. This may be useful for producing ceramic mold shells having a core portion and an envelope portion, wherein the desired properties of the core and envelope are different.

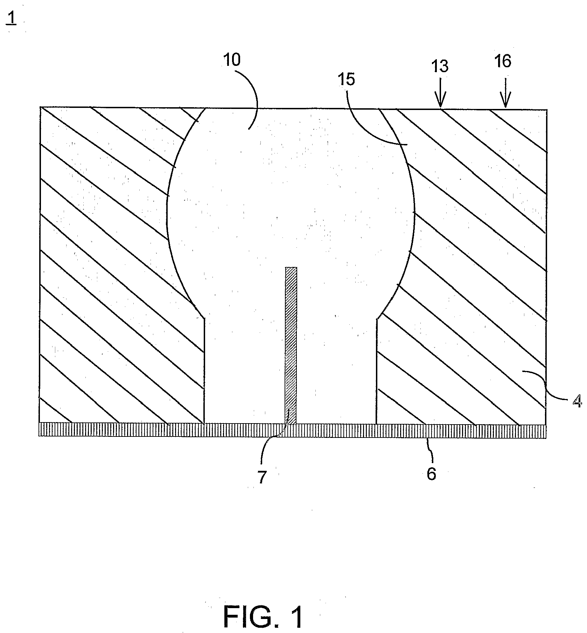

### BRIEF DESCRIPTION OF THE DRAWING

These and other advantages of the invention will be more apparent from the following description in view of the drawing that shows a ceramic mold shell formed by a process embodying aspects of the present invention.

### DETAILED DESCRIPTION OF THE INVENTION

According to aspects of the present invention, ceramic powders or powder mixtures with suitable grain sizes are used to produce a virtually dense shaped object using laser sintering, and further, to produce an object having a material property that varies across regions of the object. In one exemplary embodiment, fine ceramic powders or powder mixtures with grain sizes typically less than 30 µm are used. The powder grain size may vary from one region of the object to another, such as by preparing a powder bed having at least two regions with at least two different powder mixtures. The powder mixture may also comprise one or more components that improve the densification/sintering by producing a liquid phase during the densification process (liquid-phase sintering).

A small residual porosity that may be present after laser sintering can be densified further by additional sintering or hot isostatic pressing. The geometry of the ceramic shaped object may be stored in a Computer-Aided Design (CAD) data set. A computer may be configured to control a laser system in response to the CAD data set for performing laser sintering of the powder bed in such a way that the geometry of the component is produced from a raw material powder bed.

The figure shows a section through a ceramic mold shell 1 that is fabricated in accordance with the process of the present invention. The ceramic mold shell 1 includes an outer envelope 4, which may be produced by means of a rapid prototyping process. The ceramic mold shell 1 may be used for a casting process, such as an investment casting process. Liquid metallic ceramic material may be cast into the cavity 10 formed by the outer envelope 4.

The ceramic mold shell 1 may also have a core 7 formed in its interior so that a hollow shaped body can be produced during a casting process. The core 7 may be mechanically joined to the outer envelope 4 by suitable affixing means, such as by a common base plate 6. The core 7 may comprise a different material than the outer envelope 4, and the envelope 4 may be layered or graded with different materials and/or different densities in various regions. In the case of selective laser sintering, the laser beam generated by the laser may, for example, be modulated to apply a greater or lower power to the regions in which the core 7 is formed, so that the desired densification condition for the material of the core 7 is created. It is also contemplated for the laser power to be locally varied, so that the outer envelope 4 has a high density in an inner region 13, where it is in contact with the molten material, and may have a lower density in an outer region 16. Other combinations of materials, densities and regions may be achieved for various embodiments.

It is also possible for the topmost surface region 15 of the inner region 13 to be formed as a porous layer that is, for example, approximately 1 mm thick while the remainder of region 13 is densely formed. This embodiment of a ceramic mold shell 1 may be used for casting a body that has a rough surface. Such a rough surface may be useful, for example, if coatings are applied to the casting, so that the coatings bond very successfully to the casting as a result of the rough surface.

Aspects of the present invention may be particularly useful when the outer envelope 4 is produced together with the core 7 in a manner that provides differing materials and/or densities between the core 7 and the envelope 4, such as by controlling the composition of the powder and the heat input provided by the laser in accordance with a desired control strategy. This considerably simplifies the production process when compared to prior art methods. The ceramic mold shell 1 can be densified still further by sintering or hot isostatic pressing after it has been produced by means of a rapid prototyping selective laser sintering process. Consequently, ceramic rapid prototype models may be used directly for a casting process and do not form a pattern, but rather a shaped cast that is fully useable. Larger mold shells can also be assembled as an integrated unit during a single fabrication process.

In one embodiment, a powder bed is prepared having a first powder mix in a first region and a second powder mix in a second region. The chemical compositions and/or powder particles size distributions may be varied between the two regions, for example a first mixture in a first region for forming the envelope 4 and a second mixture in a second region for forming the core 7. The powders preferably comprise ceramics but may comprise ceramic/alloy combinations. In one embodiment, silicon nitride and yttrium powders are combined to provide a degree of liquid phase sintering. A laser may be controlled in accordance with a stored program set to apply heat to the two regions, with the amount of heat at any given location varying between the two regions, and possibly even within one region, to achieve a desired degree of densification of the powders. The temperature necessary to achieve the desired densification in the first region may be different than the temperature necessary to achieve the desired densification in the second region, and the laser may be controlled accordingly as it is scanned across the powder bed. Additional layers of powder and additional steps of laser heating may be added to form a ceramic shape in accordance with the stored program. The shape is formed as a net shape or a near net shape, with little or no additional processing necessary before use. If desired, additional heating or material infusion may be provided after the selective laser sintering process forms the shape.

While the preferred embodiments of the present invention have been shown and described herein, it will be obvious that such embodiments are provided by way of example only. Numerous variations, changes and substitutions will occur to those of skill in the art without departing from the invention herein. Accordingly, it is intended that the invention be limited only by the scope of the appended claims.

## Claims

1. A process for producing a ceramic mold from ceramic powder, said process comprising:
providing a powder bed and a laser,
scanning the laser over the powder bed
and laser sintering the powder bed in such a way that the geometry of the mold is produced from raw material powder bed,
said process further comprising forming a first region of the mold by laser sintering of a first ceramic powder and
forming a second region of the mold integral with said first region by laser sintering of a second ceramic powder,
wherein the first ceramic powder has a first average grain size and the second ceramic powder has a second average grain size,
wherein the forming of at least one of the first and second regions comprises controlling at least one parameter selected to provide a different material property in the first and second regions of the mold,
wherein additional layers of powder and additional steps of laser heating maybe added to form a ceramic shape in accordance with the mold, and wherein the first region of the ceramic mold comprises an inner region of the mold, and the second region of the ceramic mold comprises an outer region of the mold and further wherein the process is controlled so that said inner region is relatively denser than said outer region of the mold.

2. The process of claim 1 further comprising controlling a laser beam generated during said first and second laser sintering processes to produce a different sintering temperature over the first and second regions of the mold, thereby creating a different degree of densification in the first and second regions of the mold.

3. The process of claim 1 further comprising at least one of an additional laser sintering process and a hot isostatic pressing of the ceramic mold to achieve any further densification.

4. The process of claim 1 further comprising accessing a computerized representation of the mold, and using said computerized representation to control the process for producing the ceramic mold.

5. The process of claim 1 further comprising controlling the process to form the first region of the ceramic mold to comprise a shell and the second region of the ceramic mold to comprise a core disposed in a cavity of the shell.

6. The process of claim 1 further comprising using at least one of a ceramic powder, and a powder mixture comprising grain sizes of less than 30 µm for at least one of the first or second regions of the mold.

7. The process of claim 1 wherein the ceramic powder comprises at least one ingredient that affects densification and/or sintering of the ceramic powder by producing a liquid phase for at least one of the regions of the mold.

8. The process of claim 1 wherein the process is controlled to provide a surface in an inner region of the ceramic mold having a surface roughness different from an outer region of the ceramic mold.

9. A ceramic mold formed by the process of claim 1 wherein the first ceramic powder comprises a first material and the second ceramic powder comprises a second material different than the first material, wherein the first ceramic powder has a first average grain size and the second ceramic powder has a second average grain size.

10. The ceramic mold of claim 9, wherein the first region has a first porosity and the second region has a second porosity different than the first porosity.

11. The ceramic mold of claim 9, wherein the first region has a first density and the second region has a second density different than the first density.

12. The ceramic mold of claim 9, wherein the first region has a first surface roughness and the second region has a second surface roughness different than the first surface roughness.

## Patentansprüche

1. Verfahren zum Herstellen einer Keramikgießform aus einem Keramikpulver, wobei das Verfahren umfasst:
Bereitstellen eines Pulverbetts und eines Lasers,
Abtasten mit dem Laser über das Pulverbett und Lasersintern des Pulverbetts in einer solchen Weise, dass die Geometrie der Gießform aus dem Rohmaterialpulverbett hergestellt wird,
wobei das Verfahren außerdem umfasst:
Bilden eines ersten Bereichs der Gießform, indem ein erstes Keramikpulver lasergesintert wird, und
Bilden eines zweiten Bereichs der Gießform in integraler Form mit dem ersten Bereich, indem ein zweites Keramikpulver lasergesintert wird,
wobei das erste Keramikpulver eine erste durchschnittliche Korngröße aufweist und das zweite Keramikpulver eine zweite durchschnittliche Korngröße aufweist,
wobei das Bilden mindestens eines des ersten und des zweiten Bereichs ein Steuern mindestens eines Parameters umfasst, der ausgewählt wird, um eine unterschiedliche Materialeigenschaft in dem ersten und dem zweiten Bereich der Gießform bereitzustellen,
wobei zusätzliche Pulverschichten und zusätzliche Schritte eines Laserheizens hinzugefügt werden können, um eine Keramikform gemäß der Gießform zu bilden, und wobei der erste Bereich der Keramikgießform einen inneren Bereich der Gießform umfasst und wobei der zweite Bereich der Keramikgießform einen äußeren Bereich der Gießform umfasst und wobei das Verfahren außerdem so gesteuert wird, dass der innere Bereich relativ dichter als der äußere Bereich der Gießform ist.

2. Verfahren nach Anspruch 1, das außerdem ein Steuern eines Laserstrahls umfasst, der während des ersten und des zweiten Lasersinterverfahrens erzeugt wird, um unterschiedliche Sintertemperaturen über dem ersten und dem zweiten Bereich der Gießform zu produzieren, wodurch ein unterschiedlicher Verdichtungsgrad in dem ersten und dem zweiten Bereich der Gießform geschaffen wird.

3. Verfahren nach Anspruch 1, das außerdem mindestens einen Schritt eines zusätzlichen Lasersinterverfahrens und eines heißisostatischen Pressens der Keramikgießform umfasst, um eine beliebige weitere Verdichtung zu erreichen.

4. Verfahren nach Anspruch 1, das außerdem ein Zugreifen auf eine computergestützte Darstellung der Gießform und ein Verwenden der computergestützten Darstellung umfasst, um das Verfahren zum Herstellen der Keramikgießform zu steuern.

5. Verfahren nach Anspruch 1, das außerdem ein Steuern des Verfahrens umfasst, um den ersten Bereich der Keramikgießform so zu bilden, dass er eine Hülle umfasst, und um den zweiten Bereich so zu bilden, dass er einen Kern umfasst, der in einem Hohlraum der Hülle angeordnet ist.

6. Verfahren nach Anspruch 1, das außerdem ein Verwenden mindestens eines Elements eines Keramikpulvers und einer Pulvermischung umfasst, die Korngrößen von weniger als 30 µm für mindestens einen des ersten und des zweiten Bereichs der Gießform umfassen.

7. Verfahren nach Anspruch 1, wobei das Keramikpulver mindestens einen Bestandteil umfasst, der die Verdichtung und/oder das Sintern des Keramikpulvers beeinträchtigt, indem eine flüssige Phase für mindestens einen der Bereiche der Gießform erzeugt wird.

8. Verfahren nach Anspruch 1, wobei das Verfahren gesteuert wird, um eine Oberfläche in einem inneren Bereich der Keramikgießform bereitzustellen, die eine Oberflächenrauhigkeit aufweist, die verschieden von einem äußeren Bereich der Keramikgießform ist.

9. Keramikgießform, die durch das Verfahren nach Anspruch 1 hergestellt wird, wobei das erste Keramikpulver ein erstes Material umfasst und wobei das zweite Keramikpulver ein zweites Material umfasst, das verschieden von dem ersten Material ist, wobei das erste Keramikpulver eine erste durchschnittliche Korngröße aufweist und das zweite Keramikpulver eine zweite durchschnittliche Korngröße aufweist.

10. Keramikgießform nach Anspruch 9, wobei der erste Bereich eine erste Porosität aufweist und wobei der zweite Bereich eine zweite Porosität aufweist, die verschieden von der ersten Porosität ist.

11. Keramikgießform nach Anspruch 9, wobei der erste Bereich eine erste Dichte aufweist und wobei der zweite Bereich eine zweite Dichte aufweist, die verschieden von der ersten Dichte ist.

12. Keramikgießform nach Anspruch 9, wobei der erste Bereich eine erste Oberflächenrauhigkeit aufweist und wobei der zweite Bereich eine zweite Oberflächenrauhigkeit aufweist, die verschieden von der ersten Oberflächenrauhigkeit ist.

## Revendications

1. Procédé de production d'un moule en céramique à partir de poudre de céramique, procédé dans lequel :
on se procure un lit de poudre et un laser,
on balaye le lit de poudre par le laser,
et on fritte au laser le lit de poudre, de manière à produire la géométrie du moule à partir du lit de poudre servant de matière première,
le procédé comprenant, en outre, la formation d'une première région du moule par frittage au laser d'une première poudre de céramique et
la formation d'une deuxième région du moule d'un seul tenant avec la première région par frittage au laser d'une deuxième poudre de céramique,
la première poudre de céramique ayant une première granulométrie moyenne et la deuxième poudre de céramique ayant une deuxième granulométrie moyenne,
dans lequel la formation d'au moins l'une de la première et de la deuxième régions comprend le réglage d'au moins un paramètre choisi de manière à donner une propriété de matière différente dans la première et dans la deuxième régions du moule,
dans lequel des couches supplémentaires de poudre et des stades supplémentaires de chauffage au laser peuvent être ajoutés pour donner une forme céramique en accord avec le moule et dans lequel la première région du moule en céramique comprend une région intérieure du moule et la deuxième région du moule en céramique comprend une région extérieure du moule et, en outre, dans lequel le procédé est commandé de manière à ce que la région intérieure soit relativement plus dense que la région extérieure du moule.

2. Procédé suivant la revendication 1, dans lequel, en outre, on commande un faisceau laser produit pendant les premier et deuxième processus de frittage au laser pour donner une température de frittage différente sur la première et la deuxième régions du moule, en créant ainsi un degré différent de densification dans la première et dans la deuxième régions du moule.

3. Procédé suivant la revendication 1, comprenant, en outre, au moins l'un d'un procédé supplémentaire de frittage au laser et d'un pressage isostatique à chaud du moule en céramique pour obtenir toute autre densification.

4. Procédé suivant la revendication 1, comprenant, en outre, l'accès à une représentation informatisée du moule et l'utilisation de la représentation informatisée pour commander le procédé de production du moule en céramique.

5. Procédé suivant la revendication 1, dans lequel, en outre, on commande le procédé pour former la première région du moule en céramique pour avoir une coquille et la deuxième région du moule en céramique pour avoir un noyau disposé dans une cavité de la coquille.

6. Procédé suivant la revendication 1, comprenant, en outre, l'utilisation d'au moins une poudre de céramique et d'un mélange de poudre comprenant des granulométries de moins de 30 µm pour au moins l'une de la première ou de la deuxième région du moule.

7. Procédé suivant la revendication 1, dans lequel la poudre de céramique comprend au moins un ingrédient, qui affecte la densification et/ou le frittage de la poudre de céramique, en produisant une phase liquide pour au moins l'une des régions du moule.

8. Procédé suivant la revendication 1, dans lequel on commande le procédé pour obtenir une surface dans une région intérieure du moule en céramique, ayant une rugosité de surface différente de celle d'une région extérieure du moule en céramique.

9. Moule en céramique formé par le procédé de la revendication 1, dans lequel la première poudre de céramique comprend un premier matériau et la deuxième poudre de céramique comprend un deuxième matériau, différent du premier matériau, la première poudre de céramique ayant une première granulométrie moyenne et la deuxième poudre de céramique ayant une deuxième granulométrie moyenne.

10. Moule en céramique suivant la revendication 9, dans lequel la première région a une première porosité et la deuxième région a une deuxième porosité, différente de la première porosité.

11. Moule en céramique suivant la revendication 9, dans lequel la première région a une première masse volumique et la deuxième région a une deuxième masse volumique, différente de la première masse volumique.

12. Moule en céramique suivant la revendication 9, dans lequel la première région a une première rugosité de surface et la deuxième région a une deuxième rugosité de surface, différente de la première rugosité de surface.
